# EUROPEAN PATENT APPLICATION

(11) **EP 4 060 385 A1**
(43) Date of publication of application: **21.09.2022**
(21) Application number: 21163386.2
(22) Date of filing: 18.03.2021
(51) Int. Cl.: G01V 3/10, G01N 27/90, G01V 3/38

(54) **METHOD FOR OPERATING A METAL DETECTOR AND METAL DETECTOR**

(71) Applicant: Mettler-Toledo Safeline Limited, Salford Manchester M50 2XD (GB)
(72) Inventor: Rist, Iain, Stockport, SK12 1AD (GB)
(74) Representative: Mettler-Toledo

(57) **Abstract**

The method serves for operating a metal detector that comprises a balanced coil system (2) with a transmitter coil (21) that is connected to a transmitter unit (1) and with a first and a second receiver coil (22A, 22B) that are connected to an input of a receiver unit (3), which is connected to a signal processing unit (45), which transmitter unit (1) comprises a transmitter signal path (tp) for which a transmitter signal (tx) with at least one fixed or selectable operating frequency, which transmitter signal (tx) is applied to an input of a transmitter amplifier (12) that forwards the amplified transmitter signal (tx) directly or via a transmitter matching unit (13) to the transmitter coil (21); which receiver unit (3) comprises at least one receiver signal path (rp) in which the receiver signal (rs) received from the balanced coil system (2) is applied directly or via a receiver matching unit (31) to a receiver amplifier (33), which forwards the amplified receiver signal (rs) directly or indirectly to a receiver demodulator (35; 4535) that is provided in the receiver unit (3) or is implemented in the signal processing unit (45); which receiver demodulator (35; 4535) provides a demodulated complex receiver signal (rsc) with in-phase receiver signal components (rs-I) and quadrature receiver signal components (rs-Q); which in-phase receiver signal components (rs-I) and quadrature receiver signal components (rs-Q) are processed in least one signal processing path (sp) provided in the signal processing unit (45), in which signal components of the complex receiver signal (rsc) that relate to products or noise are suppressed and in which signal components originating from metal contaminants are further processed. The invention comprises the steps of providing at least one measurement signal (ms) taken from the receiver signal path (rp) to a measurement channel (8); analysing the measurement signal (ms) in an evaluation module (88) or in a receiver control module (488) to provide related measurement information, and, based on the obtained measurement information; determining in the receiver control module (488) if a critical condition is present; and, providing a procedure for handling critical conditions in the metal detector that is executed if a critical condition is present.

## Description

### Technical Field

The current invention relates to a method for operating a metal detector that uses one or more operating frequencies and to a metal detector operating according to this method.

### Background Art

A metal detector as described for example in US 8,587,301 B2, is used for detecting metal contamination in a product. When properly installed and operated, it will help reducing metal contamination in products. Most modern metal detectors use a search head with a balanced coil system. Detectors of this design can detect all metal contaminant types including ferrous, non-ferrous and stainless steels in a large variety of products such as fresh and frozen products.

A metal detector that operates according to the balanced coil-principle typically comprises a transmitter coil and two identical receiver coils that are wound onto a non-metallic frame, each typically parallel with the other. Since the receiver coils, which typically enclose the transmitter coil centred in between, are identical, an identical voltage is induced in each of them. To receive an output signal that is zero when the system is in balance, the first receiver coil is connected in series with the second receiver coil having an inversed sense of winding. Hence, the voltages induced in the receiver coils, which are of identical amplitude and inverse polarity, are cancelling out one another if the system is in balance and no contaminant is present in an observed product.

However, as soon as a particle of metal passes through the coil arrangement and is exposed to the magnetic field, Eddy currents are forced to flow in the metal particle. The Eddy currents produce a secondary magnetic field, which disturbs the primary electromagnetic field first near one receiver coil and then near the other receiver coil. While the particle of metal is passing through the receiver coils, the voltage induced in each receiver coil is changed typically by nano-volts. This change in balance results in a signal at the output of the detection coils that in a receiver unit can be processed, amplified, and subsequently be used to detect the presence of the metal contaminant in the observed product.

Hence, under ideal conditions the balanced coil system does not provide an output signal if no product or contaminant is present. However, as described in

US 2020/333498 A1, despite the fact that identical detection coils are set in a near perfectly balanced state at the factory site, there will still be occasions where the metal detector will fail to be in a balanced state with no contaminants present, resulting for example in perfectly acceptable food products being rejected. The balance of the metal detector can be disturbed by mechanical impacts on the system, by changing ambient conditions, by metallic objects located in the vicinity of the metal detector or due to relaxation or aging of components. In view of the high sensitivity of metal detection systems and minute effects of contaminants on the output voltage of the coil system, imbalances may cause saturation of the receiver channels, particularly of the input amplifiers and the phase sensitive detectors, which only operate over a limited signal voltage range. To remove such imbalances an adjustable balance signal derived from the drive signal is combined with the output signal of the detector and varied until the imbalance in the output signal is compensated.

Correction loops implemented for compensating imbalances have a relatively high time constant and low bandwidth in order not to affect signals originating from scanned objects. It will therefore take considerable time to compensate strong imbalance signals. A strong input signal may be caused by such an imbalance due to external influences, by moving a metal object into the vicinity of the metal detector, by a relatively large metal object contained in an observed product or by a malfunction of the metal detector itself, e.g., by an oscillation occurring in the transmitter channel.

Hence, different effects may have a strong influence on the output signal of the receiver unit, which may cause an ambiguity. Due to these influences the output signal may indicate the presence of a product contamination, while no contamination is present, or may indicate no contamination, while a contamination is present, leading to undesirable false positive reports or false negative reports.

The present invention is therefore based on the object of providing an improved method for operating a metal detector that uses one or more operating frequencies and to an improved metal detector operating according to this method.

With the inventive method undesirable false positive reports, i.e., false alarms and, even more important, false negative reports that are caused by critical conditions occurring in the metal detector shall be avoided.

Critical conditions occurring in the metal detector that may cause such false reports shall be detected in the shortest possible time, so that the required correction can be made and the issuance of false reports can be avoided.

Furthermore, after the occurrence of a critical condition, the metal detector shall be brought back into normal operating condition in the shortest possible time.

### Summary of invention

The method serves for operating a metal detector that comprises a balanced coil system with a transmitter coil that is connected to a transmitter unit and with a first and a second receiver coil that are connected to an input of a receiver unit, which is connected to a signal processing unit, which transmitter unit comprises a transmitter signal path for which a transmitter signal with at least one fixed or selectable operating frequency. The transmitter signals and reference signals, such as a quadrature signal, may be provided by an internal or external frequency source, for example by the signal processing unit.

The transmitter signal is applied to an input of a transmitter amplifier that forwards the amplified transmitter signal directly or via a transmitter matching unit to the transmitter coil; which receiver unit comprises at least one receiver signal path in which the receiver signal received from the balanced coil system is applied directly or via a receiver matching unit to a receiver amplifier, which forwards the amplified receiver signal directly or indirectly to a receiver demodulator that is provided in the receiver unit or is implemented in the signal processing unit. The receiver demodulator provides a demodulated complex receiver signal with in-phase receiver signal components and quadrature receiver signal components; which in-phase receiver signal components and quadrature receiver signal components are processed in least one signal processing path provided in the signal processing unit, in which signal components of the complex receiver signal that relate to products or noise are suppressed and in which signal components originating from metal contaminants are further processed.

The invention comprises the steps of providing at least one measurement signal, which is taken from the receiver signal path and provided to a measurement channel, analysing the measurement signal in an evaluation module or in a receiver control module to provide related measurement information, and, based on the obtained measurement information, determining in the receiver control module if a critical condition is present. Further, a procedure for handling critical conditions in the metal detector is executed if a critical condition is present, which procedure is defining at least one suitable action or a plurality of suitable actions that can be initiated individually or in combination.

In a preferred embodiment the measurement information is evaluated in the receiver control module, which is preferably implemented in the control unit or the signal processing unit, in order to classify the measurement information and assign the measurement information to at least one, preferably at least a first or a second class of critical conditions and deciding of how to process the complex receiver signal according to the classification of the critical condition and of how to apply corrective measures.

According to the measurement information, critical conditions may be assigned to
- a first class relating to critical conditions caused by a product or contaminant; or
- a second class relating to critical conditions caused by external influences; or
- a third class relating to critical conditions caused by an irregular state of the metal detector, such as a saturation condition; or
- a fourth class relating to critical conditions caused by a drift occurred in the metal detector.

For each of these classes the procedure for handling critical conditions defines suitable actions for terminating the critical condition.

The execution of the procedure for handling critical conditions preferably comprises at least one of the steps of
a) providing and applying control information or a control signal to at least one functional module provided in the receiver signal path for resetting the receiver unit or for returning the receiver unit or parts thereof to a normal operating condition or for holding the receiver unit or parts thereof in a stable condition; and/or
b) providing and applying control information to at least one functional module in the signal processing path for resetting the signal processing unit or for returning the signal processing unit or parts thereof to a normal operating condition or for holding the signal processing unit or parts thereof in a stable condition; and/or
c) providing information to a control program implemented in the control unit which control program initiates an acoustical or optical alarm signal to be issued by the metal detector; and/or
d) providing information to the control program implemented in the control unit which control program processes measurement data according to a protocol provided for the occurrence of a critical conditions ; and/or
e) using a balance control loop for eliminating imbalances occurring in the receiver signal path, and providing and applying control information to at least one functional module provided in the balance control loop, for resetting the balance control loop or for returning the balance control loop to an operative condition in which an imbalance can at least coarsely be corrected or held at a stable value; and/or
f) using a balance control loop for eliminating imbalances occurring in the receiver signal path, which balance control loop derives an imbalance signal either from the receiver signal or, if a critical condition is present, from the measurement signal.

Further, for one or more class of critical conditions specific modes of operation can be provided for the metal detector. Hence, after detection of a critical condition the mode of operation of the metal detector can be changed to a suitable mode.

If the metal detector uses two or more operating frequencies, then preferably for each operating frequency a dedicated receiver signal path and a dedicated signal processing path and, if signal processing in the measurement channel is dependent on the operating frequency, a dedicated measurement channel are provided. Signal processing is therefore executed in parallel for each operating frequency in different signal channels.

The measurement channel comprises a measurement signal path, in which the measurement signal is processed. In preferred embodiments the measurement signal is applied to a measurement demodulator that is provided in the measurement channel or is implemented in the signal processing unit. The measurement demodulator provides a demodulated complex measurement signal with in-phase measurement signal components and quadrature measurement signal components. The in-phase measurement signal components and quadrature measurement signal components are analysed in the signal processing unit or in the receiver control module to provide related measurement information. Hence, the measurement signal may not only be analysed before demodulation, for example by comparing the signal amplitude or signal energy with at least one reference value but also after demodulation to detect anomalies of the baseband signal.

The at least one measurement signal, which corresponds to the receiver signal at a specific point in the receiver signal path, is preferably picked-up at the input or output of an active module such as an amplifier provided in the receiver unit. Preferably, two or more measurement signals are picked up at different points in the receiver signal path so that the occurrence of a critical condition can reliably be detected together with the exact location of the occurrence.

The receiver demodulator and/or the measurement demodulator are preferably provided in the embodiment of a phase sensitive detector, which compares the applied receiver signal or measurement signal with the reference transmitter signal and with a related reference quadrature signal, to provide the demodulated complex receiver signal or the demodulated complex measurement signal. In all embodiments described below, the receiver demodulator or measurement demodulator is preferably a phase sensitive detector and is described accordingly. However, in each embodiment the demodulator can be provided in any other embodiment known to a person skilled in the art.

Observing the receiver signal path has the advantage that with the measurement channel and the analysis of the measurement signal, information is gained, which allows detection of critical conditions and supports the interpretation of the output signal of the receiver unit. With the control information provided by the receiver control unit, the metal detector with its entities, such as the transmitter unit and/or the receiver unit and/or the signal processing unit, and/or the balance control loop or functional modules of these stages, can be controlled in response to critical conditions detected. In this way the metal detector can be brought back to normal operation in the shortest possible time. Further, with the control information the measurement process and handling of measurement data can be controlled. It can be decided if measurement data are valid or invalid. Consequently, at the occurrence of critical conditions, false positive and false negative reports can be avoided. Furthermore, critical conditions can be signalled to the operator and countermeasures, such as resetting the receiver unit or parts thereof, can automatically be initiated preferably before measurement results are impaired. Regularly, critical conditions can be corrected without disturbing the measurement process. However, if a critical condition cannot be corrected in time or if the critical condition is likely to corrupt measurement information, then interruption of the measurement process is the final option.

The measurement signal can be analysed in the hardware domain or in the software domain. Accordingly, the evaluation module and/or the receiver control module can be provided in the hardware domain or can be implemented in the control unit or in the signal processing unit. The evaluation module may also be integrated in the receiver control module so that the receiver control module comprises an evaluation sub-module and a control sub-module.

In the hardware domain preferably at least one reference signal or reference value or threshold is provided with which the measurement signal or a measurement value derived from the measurement signal is compared in at least one comparator unit. By comparing the measurement signal or measurement value with a reference signal or reference value signal, a saturation condition can be detected. By comparing the measurement signal or measurement value with two or more reference signals or reference values, saturation with signal clipping can be detected at both ends of the signal range. With accordingly set reference values it can also be detected, whether the receiver signal, which corresponds to the measurement signal, reaches a critical range, while the measurement process is not yet disturbed.

Saturation occurring in the receiver signal path may cause an output voltage to go to the one or the other extreme. However, saturation often causes an undefined or non-linear behaviour of the receiver unit, which cannot properly be interpreted. In the receiver signal path, a first amplifier may be saturated while the behaviour of the following amplifier is undefined. For example, it is not guaranteed that the second amplifier in a back-to-back amplifier arrangement will output a saturated amplified copy of the input signal if the first amplifier is in saturation. Consequently, the metal detector may appear to be normal state, while in fact a critical condition is present. Hence, with the inventive method critical conditions can be detected, which otherwise would cause false positive or false negative responses.

It is important that in the event of a saturation condition present in the receiver signal path, the measurement channel does not also get saturated but still can process the measurement signal. For this purpose, preferably an attenuator, preferably a controllable attenuator, is provided, with which the measurement signal can be attenuated as required. Alternatively, or in addition the measurement signal may be processed by a phase sensitive detector, which in comparison to the receiver phase sensitive detector has a larger range that allows processing signals, such as signals with a higher amplitude, which would cause saturation in the receiver signal path.

The measurement channel may also advantageously be used as a part of an auxiliary balance control loop with which imbalances that may have caused the critical condition can be compensated at least to an extent that the receiver unit can return to normal operating condition. In a metal detector the receiver signal is typically analysed or processed for determining imbalance signal components relating to imbalances occurring in the metal detector. Based on the determined imbalance signal components a compensation signal is derived or synthesized, which is applied to a compensation unit provided in the receiver signal path to compensate the determined imbalance. In the event of a critical condition, in which imbalance signal components cannot be derived from the receiver signal, the measurement signal is analysed or processed for determining imbalance signal components relating to imbalances occurring in the metal detector and for providing a compensation signal. The compensation signal gained from the measurement signal is then applied to the compensation unit provided in the receiver signal path to compensate the determined imbalance signal components. The measurement channel is therefore part of an auxiliary compensation loop, which allows performing a coarse but quick correction of an imbalance situation that has occurred in the metal detector. Hence, after the detection of a critical situation, the control unit may change the mode of operation and may temporarily use the auxiliary balance control loop until the receiver unit has returned to normal operation, preferably until the measurement signal indicates that the receiver signal has returned into an allowable range.

Preferably a history of the measurement signal and/or of data gained from the analysis of the measurement signal and/or of status data of the metal detector relating to the critical condition are recorded so that future critical conditions can possibly be predicted, and preventive measures can rapidly be taken or that at the occurrence of a critical condition additional data is available for the interpretation of the current critical condition.

If the receiver unit presents an output signal indicating that a contaminant is present or that no contaminant is present, the signal information can be verified by the information gained by the analysis of the measurement signal, so that false positive reports and false negative reports can be avoided. If an imbalance has driven the receiver signal to an extreme, a maximum or minimum signal value, the receiver signal can be interpreted correctly, and corrective measures can immediately be taken.

In a preferred embodiment the measurement signal or a measurement value derived therefrom is compared with the at least one reference signal or reference value to determine a saturation condition in the receiver signal path. A saturation condition indicates that the input of an active module, such as an operational amplifier, in a receiver stage, such as a filter stage or gain stage, has risen above a maximum input voltage, which has caused the active module or the related receiver stage to exhibit a non-linear or an undefined behaviour or to provide minimum or maximum output voltage or signal clipping and the like. In the worst case, a saturation condition may cause the receiver unit to exhibit a signal output that indicates the absence of a contaminant, while a contaminant is present.

Further, the status of the metal detector and the measurement process is preferably continuously observed and related status information is provided to the receiver control module which then classifies the measurement information under consideration of the status information relating to the measurement information. If status information indicates that no product is present in the balanced coil system, then an assignment to the first class of critical conditions is excluded. If status indicates that vibration has been detected the critical condition may be assigned to the second class. If the correction loop indicates that a high correction signal is applied to compensate for an imbalance, the critical condition may be assigned to the fourth class.

For the interpretation of the critical condition the status information is preferably observed and recorded for a period of time so that the generation of a critical condition can be traced, and the critical condition can be avoided by countermeasures. Hence, historical information can advantageously be used for correctly assigning the critical conditions to the concerned class.

If a saturation of the receiver signal path has been detected at least one active element or module of the signal receiver path is preferably reset so that the receiver unit is brought back to normal condition. For example, at least one capacitor, which is relevant for saturation conditions, is discharged or replaced by a discharged capacitor. Alternatively, amplifier stages and filter stages are reset and then set back to normal operation condition. Alternatively, based on the evaluation of the critical condition the receiver unit or elements thereof may also be held in their condition, e.g., by temporarily interrupting the signal path or by temporarily holding the charge on a capacitor.

Preferably an operation value and a reset value of a gain parameter are provided for at least one controllable amplifier stage installed in the receiver signal path. If a critical condition occurs relating to the saturation of the receiver unit, the at least one amplifier stage is reset by setting the gain parameter to the reset value. Then the gain parameter is continuously changed from the reset value to the operation value within a gain reset period. In addition or alternatively an operation value and a reset value of a filter parameter for at least one controllable filter stage installed in the receiver signal path are provided. If a critical condition occurs relating to the saturation of the receiver unit, the at least one filter stage is reset by setting the filter parameter to the reset value and the filter parameter is then changed from the reset value to the operation value within a filter reset period. The gain reset period and the filter reset period are selected as short as possible but in such a way that any saturation condition is reliably removed. The change from the reset value to the operation value of the gain parameter or filter parameter can be linear or follow a curve.

The inventive method therefore allows detecting critical conditions such as a saturation of active modules in the receiver signal path and to initiate appropriate correction action in the shortest possible time.

### Brief description of drawings

Detailed aspects and examples of the invention are described below with reference to the drawings, wherein
- Fig. 1: shows a preferred embodiment of an inventive metal detector comprising a transmitter unit 1, a balanced coil system 2, a receiver unit 3 and a signal processing unit 45 integrated in a control unit 4 with a measurement channel 8, in which at least one measurement signal ms, msx, which has been taken from the receiver signal path rp, is analysed to detect a critical condition such as a saturation condition that has occurred in the receiver unit 3;
- Fig. 2: shows the metal detector of Fig. 1 in a further preferred embodiment in which the measurement signal ms demodulated by a phase sensitive detector 85 and is analysed in the control unit 4; and
- Fig. 3: shows the metal detector of Fig. 2 in a preferred embodiment with the operating frequency tx provided by the signal processing unit 45 and with phase sensitive detectors 435, 485 of the receiver channel 3 and the measurement channel 8 implemented in the signal processing unit 45.

### Description of embodiments

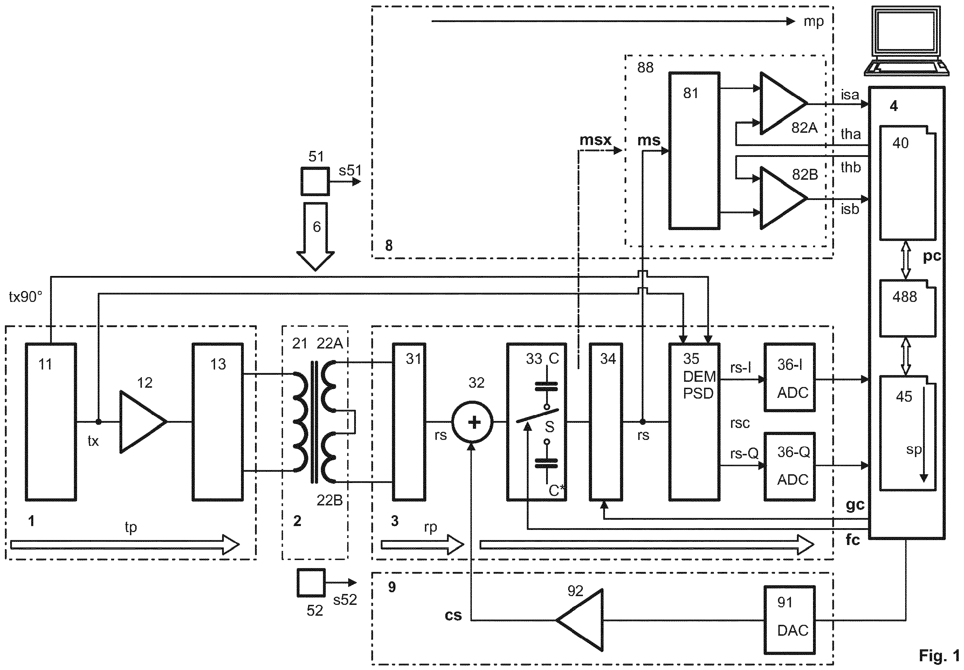

Fig. 1 shows a block diagram of an inventive metal detector in a preferred embodiment, which comprises a transmitter unit 1, a balanced coil system 2 with a transmitter coil 21 and a first and a second receiver coil 22A, 22B, a receiver unit 3, a control unit 4 that comprises a control program 40 and a digital signal processing unit 45, as well as interfaces, and input and output devices. It is symbolically shown that the metal detector may comprise a conveyor 6, on which products are transferred through the balanced coil system 2.

The transmitter unit 1 comprises a transmitter signal path tp with an internal frequency source 11, such as a synthesizer, or an external frequency source 11 located for example in the control unit 4, a transmitter amplifier 12 and preferably a transmitter matching unit 13. The transmitter signal path tp may comprise further modules such as filter devices. The frequency source 11 provides a transmitter signal tx with at least one fixed or selectable operating frequency. The frequency source 11 further provides a quadrature signal tx90° which is offset in phase by 90° relative to the transmitter signal tx. The transmitter signal tx is applied to the input of a transmitter amplifier 12, which may operate for example in class A or class B mode or may be provided in the embodiment of an H-bridge.

The output of the transmitter amplifier 12 is connected to the input of the transmitter matching unit 13, which preferably comprises a coupling transformer with at least one primary coil and a secondary coil, which allows adapting the transmitter amplifier 12 to the transmitter coil 21. The impedance matching unit 13 preferably also comprises tuning capacitors that are selectively connectable to the transmitter coil 21 to create a resonant circuit that is tuned to the selected operating frequency.

In the balanced coil system 2 the receiver signal rs is modulated by disturbances occurring in the magnetic field, when products that are containing contaminants, are transferred through the balanced coil system 2. However, even though the receiver coils 22A, 22B are identical and are set in a balanced state at the factory site, there will still be occasions where the balanced coil system will fail to be in balanced with no products present, possibly resulting in perfectly acceptable products being rejected. The balance of the metal detector can be disturbed due to mechanical impacts on the system, due to changing ambient conditions, due to metallic objects located in the vicinity of the detector or due to relaxation or aging of components. In view of the high sensitivity of metal detection systems and minute effects of contaminants on the output voltage of the coil system, imbalances may also cause saturation of the receiver channels, particularly of the input amplifiers and the phase sensitive detectors and the analogue-to-digital converters, which only operate over a limited voltage signal range. To remove such imbalances a balance control loop is provided with an adjustable compensation signal that is combined with the receiver signal and varied until the imbalance is compensated.

The receiver unit 3 comprises at least one receiver signal path rp preferably with a receiver matching unit 31, which comprises for example a balanced transformer that adapts the balanced coil system impedance to the receiver channel impedance. The receiver signal rs provided by the receiver matching unit 31 and a compensation signal cs are applied to a compensation unit 32, such as a summation or subtraction unit. With the compensation signal cs an imbalance contained in the receiver signal rs is compensated so that a compensated receiver signal is forwarded, possibly via a filter stage 33, to the input of a receiver amplifier 34. The filter stage 33 and the receiver amplifier 34 are preferably controllable by means of control signals gc, fc. With control signal gc the gain of receiver amplifier 34 can be set. With control signal fc at least one filter parameter of the filter stage 33 can be set. These control signals gc, fc and controllable functional elements 33, 34, which are shown as an example, may be used to reset the receiver unit 3 if a critical condition has been detected.

The receiver amplifier 34 delivers the amplified and compensated receiver signal rs to a receiver demodulator 35 (DEM) in the embodiment of a receiver phase sensitive detector 35 (PSD), in which the receiver signal rs is compared with an in-phase reference signal and a quadrature reference signal, namely the transmitter signal tx and the related quadrature signal tx90° provided by the frequency source 11. At the outputs of the receiver phase sensitive detector 35 a demodulated complex receiver signal rsc with an in-phase receiver signal component rs-I and a quadrature receiver signal component rs-Q is provided.

The complex receiver signal rsc is forwarded from the receiver phase sensitive detector 35 via receiver analogue-to-digital converters 36-I; 36-Q to a digital signal processing unit 45, for example a digital signal processor provided in the control unit 4. The control unit 4 further comprises an operating or control program 40, with which all processes of the metal detector during calibration and operation are controlled.

If the metal detector uses more than one operating frequency, then the receiver unit 3 preferably comprises a receiver signal path rp individually for each operating frequency. The receiver signal would therefore be processed for different operating frequencies in different receiver paths rp arranged in parallel to one another.

In the signal processing unit 45, a signal processing path sp is implemented, in which the complex receiver signal rsc is processed. Signal components of the complex receiver signal rsc that relate to products or noise are preferably suppressed and signal components originating from metal contaminants are further processed and detected.

Further, along the signal processing path sp the complex receiver signal rsc is processed to determine imbalance components that are present in the receiver signal and to provide a compensation signal cs with the determined imbalances, which are constant or have a very low frequency, are removed from the receiver signal rs. The digital compensation signal provided by the signal processing unit 45 is forwarded after modulation to a digital-to-analogue converter 91 which provides an analogue compensation signal cs that is forwarded to compensation unit 32 in the receiver unit 3.

The metal detector further comprises a measurement channel 8 with a conditioning module 81, which at the input receives a measurement signal ms taken from the receiver signal path rp. In the present embodiment the measurement signal ms is taken from the output of receiver amplifier 34. Symbolically it is shown, that more than one measurement signals ms, msx can be picked up along the receiver signal path rp and can be processed in the measurement channel 8 along a measurement signal path mp. The picked-up measurement signals ms, msx can be applied time-multiplexed to the conditioning module 81 or can be processed in dedicated measurement channel 8 that are arranged in parallel to one another. Each measurement channel 8 may be adapted to the applied measurement signal ms, msx.

The conditioning module 81 processes the measurement signal ms to obtain a signal that represents the receiver signal at the output of receiver amplifier 34 and that is comparable with at least one reference signal or reference value tha, thb provided by the control unit 4, preferably by a receiver control module 488 implemented in the control unit 4. In the present example two reference voltages or thresholds tha, thb are provided, which define an upper limit and the lower limit of the signal range in which the measurement signal ms should lie during normal operation.

The reference signals tha, thb and the output signals of the conditioning module 81 are individually applied to a first comparator module 82A and to a second comparator module 82B, which provide related output signals isa, isb, which indicate the occurrence of a critical condition, in which the measurement signal ms has exceeded the signal range or thresholds tha or thb.

The conditioning module 81 may convert the measurement signal ms by means of a rectifier into a DC voltage, which is compared by the comparator modules 82A, 82B with at least one reference voltage or threshold tha, thb. A plurality of reference voltages or thresholds tha, thb may be set to different values. A first threshold tha may be set to a value corresponding to a signal range, which during normal operation of the metal detector is typically not exceeded but does not yet indicate a critical level of the receiver signal rs. A second threshold thb is set to a value that indicates the likelihood of signal clipping or receiver saturation. The measurement signal ms can therefore be analysed by means of the comparators 82A, 82B, to deliver measurement information, which information or output signals isa, isb, are forwarded to the receiver control module 488, which decides if a critical condition has occurred and initiates counter measures accordingly.

To facilitate this task and to initiate suitable corrective measures when a critical condition has occurred, the receiver control module 488 preferably receives supplemental information concerning the current status of the metal detector. With a sensor unit 51 the presence of products in the balanced coil system 2 is sensed and reported with signal s51 to the receiver control module 488. With sensor or sensor group 52 external influences, such as vibrations and/or temperature conditions are measured and reported with signal s52 to the receiver control module 488. Further, a timer may be provided, which reports the duration of time in which one of the thresholds tha, thb has been exceeded or an external influence has occurred.

Based on measurement information and status information received, the receiver control module 488 preferably classifies critical conditions, for example into a first class relating to critical conditions caused by a product or contaminant; or a second class relating to critical conditions caused by an external influence, such as a vibration; or a third class relating to critical conditions caused by an irregular state of the metal detector such as a saturation condition; or a fourth class relating to critical conditions caused by a drift occurred in the metal detector. Based on the classification of the critical condition the receiver control module 488 may initiate a correction procedure which has been pre-determined for the assigned class.

The receiver control module 488 may for example observe that a product enters the balanced coil system 2 and that the measurement signal ms simultaneously exceeds the first and/or the second threshold tha, thb. The receiver control module 488 may therefore assign this critical condition to the first class. Depending on the time the thresholds tha, thb were exceeded, the receiver control module 488 may continue normal operation or may initiate corrective action.

If exceeding of the thresholds tha, thb is reported while external influences, such as vibrations, are detected the critical condition is assigned to the second class. As a corrective measure, the metal detection process may be stopped, and the critical condition may be signalled to the operator. This procedure has the advantage that appropriate actions can selectively be taken for each class of critical conditions. For example, measurement data may be discarded only if a critical condition indicates that the measurement results might be invalid.

If exceeding of the thresholds tha, thb is detected, while no product is present in the balanced coil system 2 and no external influence had been detected an irregular state of the metal detector may be present and the critical condition is assigned to the third class. In this case corrective action is typically always initiated.

If exceeding of the thresholds tha, thb is detected together with a large compensation signal cs, a drift or imbalance according to the fourth class may be present. This status is again signalled to the operator for example by sound or light or a message on the display of the control unit 4.

Classification or interpretation of the measurement information may further be supported by historical data. For this purpose, data of critical conditions, related status data and classification data and preferably data of external influences and the course of the compensation signal cs are preferably registered. Preferably also time periods may be registered, in which the level of the measurement signal occurred in a critical range between two thresholds tha, thb that have been set accordingly. Such historical data can be used for the future analysis of critical conditions or even for preventive measures. If a current data pattern corresponds to a registered data pattern it is likely that the critical condition should identically be classified.

The inventive method may provide explanations for critical conditions, which before could not be interpreted. Knowledge of the cause of critical conditions however allows selectively taking suitable corrective measures, with which the metal detector is brought back to normal operation within the shortest possible time.

If the threshold thb is exceeded and an enduring saturation within the receiver unit 3 is detected, the receiver channel or active modules of the receiver channel, such as at least one filter or amplifier are reset and then brought back into normal operating condition. A detected saturation condition is therefore terminated in the shortest possible time so that the measurement process can proceed without or only a short interruption.

Typically, a saturation condition is caused and maintained by charged capacitors, such as capacitors that are parts of filters, amplifiers or integrators. By discharging capacitors used in the receiver signal path rp that are relevant for a saturation condition, the saturation condition can be terminated. For example, a resistor may be connectable by a switch, such as a field-effect transistor, in parallel to the capacitor so that the capacitor can be discharged whenever required. Since discharging a capacitor requires time, capacitors may be provided in pairs, whereby the capacitors are alternatingly connectable to the electronic circuit. With this arrangement charged capacitors can be replaced by discharged capacitors at an instance thus bringing the receiver unit 3 back to normal operation in no time. As an example, an RC-filter with a charged first capacitor C can be changed to an identical RC*-filter with a discharged second capacitor C*. Fig. 1 illustrates that a switch S, which is actuated with a control signal fc, a first capacitor C or a second capacitor C* is connectable to the filter stage 33. By changing the setting of switch S the first capacitor C is replaced in the electronic circuit by the second capacitor C* and vice versa.

Alternatively, when detecting a critical condition, which has been caused for example by a large metal contaminant, the receiver unit 3 is preferably held temporarily in its current condition, e.g., by interrupting the receiver signal path or by holding the charge of a capacitor constant, which may be connected to an active module such as an operational amplifier. This has the advantage that the metal detector may automatically return to normal operating condition without requiring further action.

In a further preferred embodiment, an operation value and a reset value of a filter parameter are provided for at least one controllable filter stage 33 installed in the receiver signal path rp. If a critical condition has been detected, the at least one filter stage 33 is reset preferably by setting the filter parameter to the reset value and then the filter parameter is changed from the reset value to the operation value within a filter reset period. Resetting filter stage 33 can be performed in the analogue and digital domain. A filter parameter may be set and changed with a filter control signal fc applied to the filter stage 33.

In another preferred embodiment an operation value and a reset value of a gain parameter are provided for at least one controllable amplifier stage 34 installed in the receiver signal path rp. If a critical condition has been detected, the at least one amplifier stage 34 is reset by setting the gain parameter to the reset value and then the gain parameter is continuously changed from the reset value to the operation value within a gain reset period. A gain parameter may be set and changed with control signal gc applied to the receiver amplifier 34.

Filter stages 33 and amplifier stages 34 are preferably provided at the input side of the receiver phase sensitive detector 35 to amplify and filter the modulated receiver signal rs and/or at the output side of the receiver phase sensitive detector 35 to amplify and filter the demodulated receiver signal or baseband signal rs.

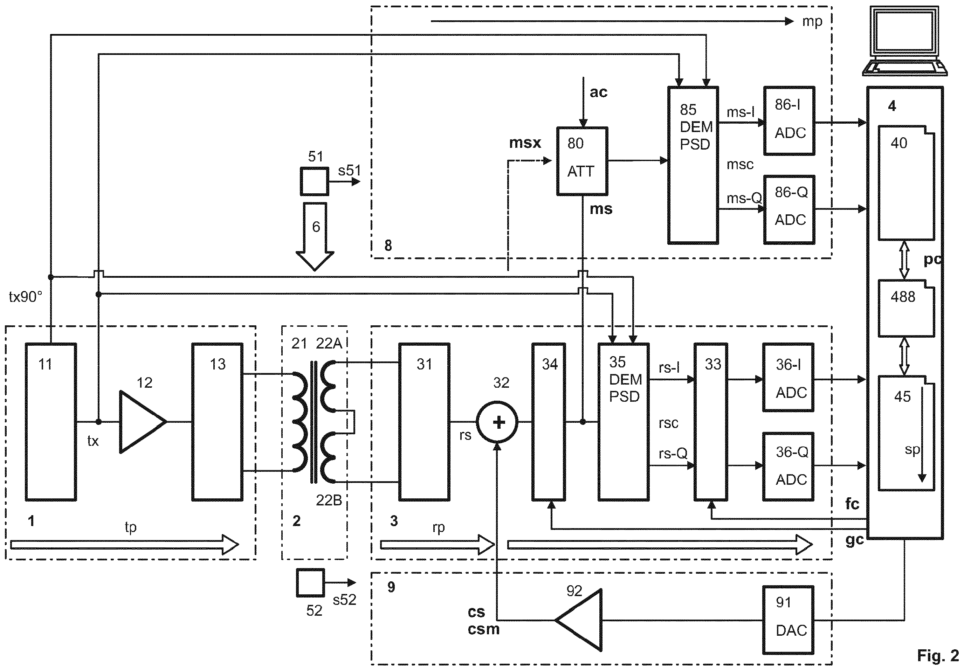

Fig. 2 shows the metal detector of Fig. 1 in a further preferred embodiment. In this embodiment the measurement signal ms is applied in the measurement channel 8 to a measurement demodulator 85 (DEM) preferably provided in the embodiment of a phase sensitive detector 85 (PSD). The measurement phase sensitive detector 85 compares the measurement signal ms taken from the output of the receiver amplifier 34 with an in-phase reference signal and a quadrature reference signal, namely the transmitter signal tx and the related quadrature signal tx90° preferably provided by the frequency source 11, to produce a demodulated complex measurement signal msc with in-phase measurement signal components ms-I and quadrature measurement components ms-Q, which are forwarded via analogue-to-digital converters 86-I; 86-Q to the signal processing unit 45.

As mentioned above, it is important that in the event of a saturation condition present in the receiver signal path rp, the measurement channel 8 does not also get saturated but still can process the measurement signal ms. For this purpose, the measurement channel 8 optionally comprises an attenuator 80, which attenuates the measurement signal ms. Alternatively, the measurement phase sensitive detector 85 is optionally provided with a larger range compared to the receiver phase sensitive detector 35 which operates with a higher accuracy. Hence, the measurement phase sensitive detector 85 allows processing signals with higher amplitudes that would saturate the receiver phase sensitive detector 35. The attenuator 80 has preferably a control input at which a control signal ac can be applied to set a desired attenuation. The attenuation is preferably set by the control unit 4, preferably the signal control unit 45 or the receiver control unit 488.

The measurement signal ms or msx could be picked-up at another point along the receiver signal path rp and could be amplified and/or attenuated along the measurement signal path mp, as required, before it is applied to the input of the measurement demodulator 85 (DEM) or measurement phase sensitive detector 85 (PSD).

In the signal processing unit 45 or in the receiver control module 488 the complex measurement signal msc is analysed to provide related measurement information. Based on the obtained measurement information the receiver control module 488 decides if a critical condition is present. As described above the critical condition may be classified and corrective measures provided for the related class may be applied. This embodiment has the advantage that the measurement signal ms, msx can more easily be analysed in the digital domain by that signal processing unit 45 or the receiver control module 488. However, it is advised that the measurement signal ms, msx is continuously analysed and measurement information is preferably gathered before saturation occurs in the receiver signal path rp.

As described with reference to Fig. 1 a balance control loop is provided with which imbalances occurring in the metal detector are cancelled. The complex receiver signal rsc is processed along the signal processing path sp of the signal processing unit 45 to determine an imbalance component in the complex receiver signal rsc and to provide a corresponding compensation signal cs, which is forwarded via a digital-to-analogue converter 91 to compensation unit 32 in the receiver unit 3.

Since the measurement channel 8 is still operative when critical conditions inhibit proper function of the receiver unit 3, the measurement signal ms is preferably analysed after the detection of a critical condition for determining imbalance signal components relating to imbalances occurring in the metal detector and for providing a compensation signal csm that corresponds to the determined imbalance signal components. By applying the compensation signal csm, which is derived from the measurement signal ms to the compensation unit 32 provided in the receiver signal path rp the determined imbalance is compensated. Consequently, the measurement channel 8 forms part of an auxiliary balance control loop, which is activated when a critical condition occurs. Hence, the auxiliary balance control loop will bring the receiver unit 3 back to a state in which the normal balance control loop can be reactivated to optimise compensation of the imbalances.

After detection of a critical condition, the receiver control module 488 may initiate corrective action. With a process control command pc, the measurement process or the mode of operation of the metal detector may be changed as required. With control signals gc, fc operation parameters of amplifier units 34 and filter units 33 may be changed. Control signal pc may activate or deactivate the auxiliary balance control loop.

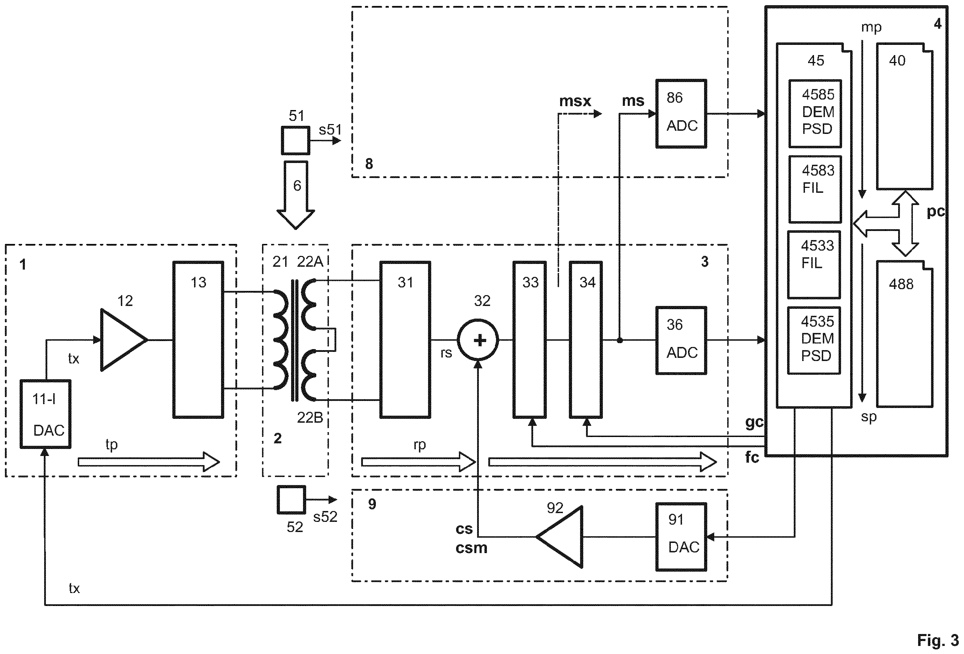

Fig. 3 shows that metal detector of Fig. 2 in a preferred embodiment with the transmitter signal tx or operating frequency provided by the signal processing unit 45. Phase sensitive detectors 435, 485 of the receiver unit 3 and the measurement channel 8 are implemented in the signal processing unit 45. Further, a filter module 4533 for processing the demodulated in-phase and quadrature signal components of the receiver signal rs and a filter module 4583 for processing the demodulated in-phase and quadrature signal components of the measurement signal ms are implemented in the signal processing unit 45. Since imbalance signal components are present in a low frequency range, filter module 4533 may provide an imbalance signal component contained in the receiver signal rs and filter module 4583 may provide an imbalance signal component contained in the measurement signal ms. Accordingly, the compensation signal may be derived from the receiver signal rs for the application in the normal balance control loop or from the measurement signal ms for the application in the auxiliary balance control loop as required.

### Reference signs list

- 1: transmitter unit
- 11: frequency source, synthesizer
- 12: transmitter amplifier
- 13: transmitter matching unit
- 2: coil system
- 21: transmitter coil
- 22A, 22B: receiver coil
- 3: receiver unit
- 31: receiver matching unit
- 32: compensation unit
- 33: Filter unit
- 34: receiver amplifier
- 35, 4335: receiver phase sensitive detector / demodulator
- 36I, 36Q: receiver analogue-to-digital converters
- 4: control unit
- 40: control program
- 45: signal processing unit / module
- 435, 485: phase sensitive detectors
- 488: receiver control module
- 4533: filter module for processing the ms-I signal components of the signal rs
- 4583: filter module for processing the ms-Q signal components of the signal ms
- 51: product sensor
- 52: sensor measuring external influences / vibration sensor
- 6: product conveyor
- 8: measurement channel
- 80: attenuator
- 81: conditioning unit
- 82A, 82B: comparators
- 85, 4585: measurement phase sensitive detector / demodulator

- 86I, 86Q: measurement analogue-to-digital converters
- 88: evaluation module
- 9: compensation channel
- 91: digital-to-analogue converter in the compensation channel
- 92: amplifier in the compensation channel
- ac: control signal to the attenuator 80
- cs: compensation signal
- csm: compensation signal corresponding to the determined imbalance signal components
- gc: control signal for setting the gain or receiver amplifier 34
- fc: control signal for setting at least one filter parameter of the filter stage 33
- isa, isb: output signals
- mp: measurement signal path
- ms, msx: measurement signal
- msc: complex measurement signal
- ms-I: in-phase measurement signal components
- ms-Q: quadrature measurement components
- pc: process control command
- rp: receiver signal path
- rs: receiver signal
- rsc: complex receiver signal
- rs-I: in-phase receiver signal component
- rs-Q: quadrature receiver signal component
- sp: signal processing path
- s51: signal of sensor 51
- s52: signal of sensor 52
- tha, thb: reference signal threshold / reference value
- tp: transmitter signal path
- tx: transmitter signal
- tx90°: quadrature signal (offset in phase by 90° relative to the transmitter signal)
- C: first capacitor
- C*: second capacitor
- S: switch

## Claims

1. Method for operating a metal detector that comprises a balanced coil system (2) with a transmitter coil (21) that is connected to a transmitter unit (1) and with a first and a second receiver coil (22A, 22B) that are connected to an input of a receiver unit (3), which is connected to a signal processing unit (45),
which transmitter unit (1) comprises a transmitter signal path (tp) for which a transmitter signal (tx) with at least one fixed or selectable operating frequency, which transmitter signal (tx) is applied to an input of a transmitter amplifier (12) that forwards the amplified transmitter signal (tx) directly or via a transmitter matching unit (13) to the transmitter coil (21);
which receiver unit (3) comprises at least one receiver signal path (rp) in which the receiver signal (rs) received from the balanced coil system (2) is applied directly or via a receiver matching unit (31) to a receiver amplifier (33), which forwards the amplified receiver signal (rs) directly or indirectly to a receiver demodulator (35; 4535) that is provided in the receiver unit (3) or is implemented in the signal processing unit (45);
which receiver demodulator (35; 4535) provides a demodulated complex receiver signal (rsc) with in-phase receiver signal components (rs-I) and quadrature receiver signal components (rs-Q);
which in-phase receiver signal components (rs-I) and quadrature receiver signal components (rs-Q) are processed in least one signal processing path (sp) provided in the signal processing unit (45), in which signal components of the complex receiver signal (rsc) that relate to products or noise are suppressed and in which signal components originating from metal contaminants are further processed, **characterised by** the steps of
providing at least one measurement signal (ms) taken from the receiver signal path (rp) to a measurement channel (8);
analysing the measurement signal (ms) in an evaluation module (88) or in a receiver control module (488) to provide related measurement information, and, based on the obtained measurement information;
determining in the receiver control module (488) if a critical condition is present; and,
providing a procedure for handling critical conditions in the metal detector that is executed if a critical condition is present.

2. Method according to claim 1, comprising the steps of
evaluating the measurement information in the receiver control module (488) to classify the measurement information and assign the measurement information to at least one, preferably at least a first or a second class of critical conditions and providing the procedure for handling critical conditions in the metal detector with instructions for each class of critical conditions.

3. Method according to claim 2, comprising the steps
of assigning the critical condition according to the measurement information to
- a first class relating to critical conditions caused by a product or contaminant; or
- a second class relating to critical conditions caused by an external influence, such as a vibration; or
- a third class relating to critical conditions caused by an irregular state of the metal detector, such as fault of the electronics; or
- a fourth class relating to critical conditions caused by a drift occurred in the metal detector.

4. Method according to one of the claims 1 to 3, wherein the execution of the procedure for handling critical conditions comprises at least one of the steps of
a) providing and applying control information or a control signal (gc; fc) to at least one functional module (33, 34) provided in the receiver signal path (rp) for resetting the receiver unit (3) or for returning the receiver unit (3) or parts thereof to a normal operating condition or for holding the receiver unit (3) or parts thereof in a stable condition;
b) providing and applying control information (pc) to at least one functional module (4533) in the signal processing path (sp) for resetting the signal processing unit (45) or for returning the signal processing unit (45) or parts thereof to a normal operating condition or for holding the signal processing unit (45) or parts thereof in a stable condition;
c) providing information (pc) to a control program (40) implemented in the control unit (4) which control program (40) initiates an acoustical or optical alarm signal to be issued by the metal detector;
d) providing information (pc) to the control program (40) implemented in the control unit (4) which control program (40) processes measurement data according to a protocol provided for the occurrence of a critical conditions ;
e) using a balance control loop for eliminating imbalances occurring in the receiver signal path (rp), and providing and applying control information to at least one functional module (32) provided in the balance control loop, for resetting the balance control loop or for returning the balance control loop to an operative condition in which an imbalance can at least coarsely be corrected or held at a stable value;
f) using a balance control loop for eliminating imbalances occurring in the receiver signal path (rp), which balance control loop derives an imbalance signal either from the receiver signal (rs) or, if a critical condition is present, from the measurement signal (ms).

5. Method according to one of the claims 1 to 4, comprising the steps of
applying the measurement signal (ms) to a measurement demodulator (85; 4585) provided in the measurement channel (8) or implemented in the signal processing unit (45), which measurement demodulator (85, 4585) provides a demodulated complex measurement signal (msc) with in-phase measurement signal components (ms-I) and quadrature measurement signal components (ms-Q), which in-phase measurement signal components (ms-I) and quadrature measurement signal components (ms-Q) are analysed in the signal processing unit (45) or in the receiver control module (488) to provide related measurement information.

6. Method according to one of the claims 1 to 5, comprising the steps of
providing the receiver demodulator (35; 4535) or the measurement demodulator (85, 4585) or the receiver demodulator (35; 4535) and the measurement demodulator (85, 4585) in the embodiment of a phase sensitive detector, which compares the applied receiver signal (rs) or measurement signal (ms) with the reference transmitter signal (tx) and a related reference quadrature signal (tx90°), to provide the demodulated complex receiver signal (rsc) or the demodulated complex measurement signal (msc).

7. Method according to one of the claims 1 to 6, comprising the steps of
providing at least one measurement reference signal or measurement reference value (tha, thb) and comparing the measurement signal (ms) or a measurement value derived from the measurement signal (ms) with the at least one measurement reference signal or measurement reference value (tha, thb) to determine the presence of a critical condition.

8. Method according to one of the claims 1 to 7, comprising the steps of
providing an attenuator (80) for attenuating the measurement signal (ms) taken from the receiver signal path (rp) or providing a measurement phase sensitive detector (85; 4585), which has a larger range than the receiver phase sensitive detector (35, 4535) or;
providing an attenuator (80) for attenuating the measurement signal (ms) taken from the receiver channel (rp) and providing a measurement phase sensitive detector (85, 4585), which has a larger range than the receiver phase sensitive detector (35, 4535).

9. Method according to one of the claims 1 to 8, comprising the steps of
analysing the receiver signal (rs) for determining imbalance signal components relating to imbalances occurring in the metal detector and providing a compensation signal (cs) that corresponds to the determined imbalance signal components and applying the compensation signal (cs) to a compensation unit (32) provided in the receiver signal path (rp) to compensate the detected imbalance signal components and,
in the event that a critical condition has been detected, analysing the measurement signal (ms) for determining imbalance signal components relating to imbalances occurring in the metal detector and providing a compensation signal (csm) that corresponds to the determined imbalance signal components and applying the compensation signal (csm) to the compensation unit (32) provided in the receiver signal path (rp) to compensate the determined imbalance signal components.

10. Method according to one of the claims 1 to 9, comprising the steps of
comparing the measurement signal (ms) or measurement value with the at least one reference signal or reference value (tha, thb) to determine a saturation condition in the receiver signal path (rp).

11. Method according to one of the claims 1 to 10, comprising the steps of
capturing or recording the status of the metal detector and the measurement process and providing related status information such as current status information or historical status information to the receiver control module (488) which classifies the measurement information under consideration of the status information relating to the measurement information.

12. Method according to one of the claims 1 to 11, comprising the steps of
detecting at least one of the following conditions
- the presence of a product in the balanced coil system (2);
- the presence of vibrations;
- the presence of external electromagnetic interferences in the metal detector; and
providing related status information to the receiver control module (488), which evaluates the measurement information on the consideration of the obtained status information.

13. Method according to one of the claims 1 to 12, comprising the steps of
providing an operation value and a reset value of an operation parameter, such as a gain parameter, for at least one controllable active module, such as amplifier stage (34), installed in the receiver signal path (rp) and resetting the at least one controllable active module if a critical condition has been detected by setting the operation parameter to the reset value and continuously changing the operation parameter from the reset value to the operation value within a gain reset period, and/or comprising the steps of
providing an operation value and a reset value of a filter parameter for at least one controllable filter stage (33) installed in the receiver signal path (rp) and
resetting the at least one filter stage (33) if a critical condition has been detected by setting the filter parameter to the reset value and changing the filter parameter from the reset value to the operation value within a filter reset period.

14. Method according to one of the claims 1 to 13, comprising the steps of,
depending on the detected critical condition,
controlling or resetting the receiver unit (3) by discharging or exchanging at least one capacitor (C, C*) in the electronic circuit of the receiver unit (3), or
depending on the detected critical condition, particularly a critical condition caused by a contaminant,
holding the receiver unit (3) in its current condition.

15. Method according to one of the claims 1 to 14 comprising the steps of
providing for each operating frequency
a dedicated receiver signal path (rp) and
a dedicated signal processing path (sp) and,
if signal processing in the measurement channel (8) is dependent on the operating frequency,
a dedicated measurement channel (8).

16. Metal detector operating according to a method as defined in one of the claims 1 to 15.

17. Metal detector operating according to claim 16 comprising a balanced coil system (2) with a transmitter coil (21) that is connected to a transmitter unit (1) and with a first and a second receiver coil (22A, 22B) that are connected to an input of a receiver unit (3), which is connected to a signal processing unit (45),
which transmitter unit (1) comprises a transmitter signal path (tp) for which a transmitter signal (tx) with at least one fixed or selectable operating frequency and a related quadrature signal (tx90°) are provided, which transmitter signal (tx) is applicable to an input of a transmitter amplifier (12) that forwards the amplified transmitter signal (tx) directly or via a transmitter matching unit (13) to the transmitter coil (21);
which receiver unit (3) comprises at least one receiver signal path (rp) in which the receiver signal (rs) received from the balanced coil system (2) is applicable directly or via a receiver matching unit (31) to a receiver amplifier (33), which forwards the amplified receiver signal (rs) directly or indirectly to a receiver phase sensitive detector (35; 4535) that is provided in the receiver unit (3) or is implemented in the signal processing unit (45),
which receiver phase sensitive detector (35, 4535) is designed to compare the receiver signal (rs) with the reference transmitter signal (tx) and the reference quadrature signal (tx90°), to produce a demodulated complex receiver signal (rsc) with in-phase receiver signal components (rs-I) and quadrature receiver signal components (rs-Q), and
which in-phase receiver signal components (rs-I) and quadrature receiver signal components (rs-Q) are processed in least one signal processing path (sp) provided in the signal processing unit (45), in which signal components of the complex receiver signal (rsc) that relate to products or noise can be suppressed and in which signal components originating from metal contaminants are further processed,
**characterised in that**
at least one measurement channel (8) is provided that receives a measurement signal (ms) taken from the receiver signal path (rp),
at least one evaluation module (88, 488) is provided designed for analysing the measurement signal (ms) and for providing related measurement information, and
a receiver control module (488) is provided designed for determining if a critical condition is present and, in the event that a critical condition is present, for providing control information (gc, fc, pc) for controlling the measurement process or for controlling at least one functional module (33, 34, 4534) provided in the receiver signal path (rp) or for controlling the measurement process and for controlling the at least one functional module (33, 34, 4534) provided in the receiver signal path (rp).
